# EUROPEAN PATENT SPECIFICATION

(11) **EP 0 482 256 B1**
(45) Date of publication and mention of the grant of the patent: **18.05.1994**
(21) Application number: 90311656.4
(22) Date of filing: 24.10.1990
(51) Int. Cl.: G01C 21/20

(54) **Road network navigation systems**
Strassennetz-Navigationssystem
Système de navigation pour réseau de rues

(43) Date of publication of application: 29.04.1992
(73) Proprietor: ROKE MANOR RESEARCH LIMITED, Romsey, Hampshire, SO51 0ZN (GB)
(72) Inventor: Worster, Thomas, Southampton, Hampshire, SO2 4JY (GB)
(74) Representative: Fish, Norman Ernest

(56) References cited:
- EP-A- 0 323 229
- EP-A- 0 372 840
- DE-A- 3 006 141

## Description

This invention relates to a method of coding a road network for navigation purposes, and to a road network navigation system incorporating such methods. EP-A-0 323 229 discloses such a method.

In-car route guidance systems are known in which a road network consisting of an interconnected system of roads and road junctions is coded in the form of a so-called directed graph, a minimum route search algorithm based on the directed graph being used to determine a navigation path through the road network. In such systems, the directed graph is defined as comprising a node or vertex corresponding to each of the road junctions and one or more weighted arcs corresponding to each of the roads interconnecting the road junctions. Whilst such systems are generally acceptable they cannot directly take account, for example, of travel time differences that can occur due to various turning movements, e.g. it generally takes more time to turn right than it takes to turn left, and problems related to restricted turning movements, e.g. right turns may be banned into a two-way street. The normal way of coping with these special circumstances is to store the information in say, a look-up table, which is consulted as part of the minimum route search algorithm which is used to determine a route through the road network. This necessarily requires more memory space and can increase the time required to determine the required route through the road network.

It is an object of the present invention to provide an improved method of coding a road network using directed graphs which can automatically take the above mentioned special circumstances into account.

According to one aspect of the present invention there is provided a method of coding a road network for navigation purposes comprising the step of generating a directed graph in respect of said road network, said directed graph comprising a node or vertex corresponding to each of the roads of said road network, and one or more weighted arcs corresponding to each of the road junctions of said road network interconnecting said nodes or vertices.

In a preferred arrangement for carrying out the invention according to the aforesaid one aspect, each node or vertex is defined as being at one end of the road to which it corresponds, and each weighted arc is defined to include an arc portion relating to the corresponding road junction and a further arc portion relating to a road terminating at said road junction.

According to a further aspect of the present invention there is provided a road network navigation system comprising means for generating a directed graph in respect of the road network in accordance with the method according to the aforesaid one aspect of the present invention, and means for implementing a minimum route search algorithm based on said directed graph for determining a navigation route through said road network.

An exemplary embodiment of the invention will now be described reference being made to the accompanying drawings, in which:
Figure 1, depicts diagrammatically a typical road network; and,
Figure 2, depicts a directed graph in accordance with the present invention corresponding to the road network of Figure 1.

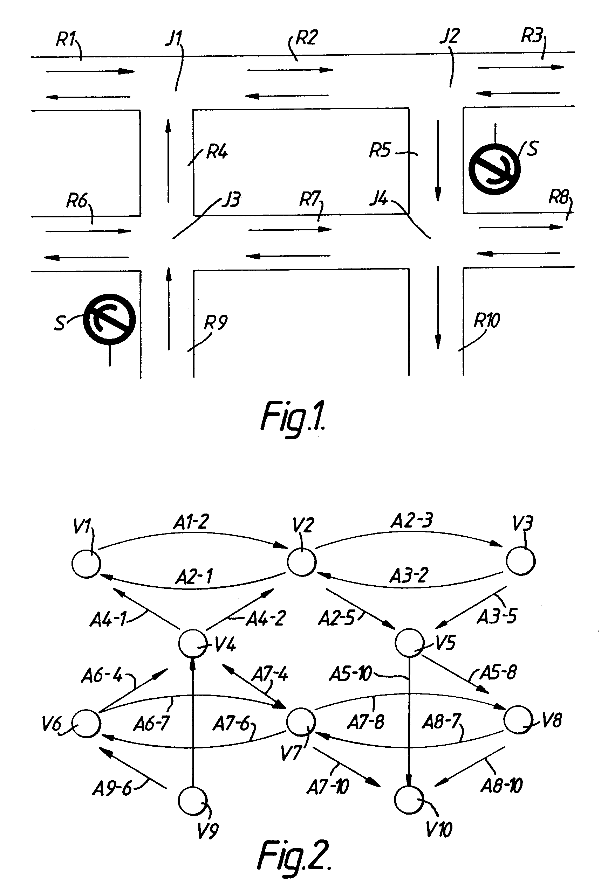

In Figure 1 there is depicted a typical road network which, for the purposes of the present invention, is deemed to consist of four road junctions J1 to J4 and ten interconnecting roads R1 to R10. It is to be assumed that roads R1 to R3 and R6 to R8 are each two-way roads and that roads R4 and R9 are one-way northwards and that roads R5 and R7 are one-way southwards. It is also to be assumed that "no right-turn" restrictions apply from road R9 to road R7 and from road R5 to road R7, as indicated by the "no right-turn" signs 5.

In Figure 2 of the drawings there is depicted a directed graph in accordance with the present invention, corresponding to the road network of Figure 1. The directed graph of Figure 2 comprises ten vertices V1 to V10 which correspond respectively to the roads R1 to R10. Adjacent ones of the vertices V1 to V10 are interconnected by weighted arcs corresponding to each of the junctions J1 to J4 and which are referenced A in combination with a hyphenated number which is indicative of the vertices that the respective arc extends between and the effective direction of the respective arc. Thus, the weighted arc which corresponds to junction J1 and which extends from vertex V1 to vertex V2 (corresponding to roads R1 to R2) is referenced A1-2, and the weighted arc which corresponds to junction J4 and which extends from vertex V5 to vertex V10 (corresponding to roads R5 to R10) is referenced A5-10. It will be appreciated, for example, that because roads R5 and R10 are one-way roads, there is only a single weighted arc (A5-10) extending between vertex V5 (corresponding to road R5) and vertex V10 (corresponding to road R10). Also, because there is a "no right-turn" restriction from road R9 to R7, there is no weighted arc from vertex V9 to vertex V7 and similarly, because there is a "no right-turn" restriction from road R5 to road R7, there is no weighted arc from vertex V9 to vertex V7. In this way road restrictions, such as restricted turning movements can be directly taken account of on the directed graph of Figure 2.

It will be appreciated that in the foregoing example, the vertices V1 to V10 correspond to the roads R1 to R10 respectively, and may be considered to exist, for example, at the mid-point of the respective road. In this case, each weighted arc A will consist of a first arc portion which corresponds to the travel time from the mid-point of one road, a second arc portion which corresponds to the travel time to traverse a junction between adjacent roads, and a third arc portion which corresponds to the travel time to the mid-point of the adjacent road. Whilst theoretically this is acceptable, if, for example, a road becomes blocked in one direction, this will affect the weighting of at least two weighted arcs. For example, if road R2 in Figure 1 becomes blocked between junctions J1 and J2, the weighting of arcs A1-2 and A2-3 will be affected and would need to be changed in order to maintain an up-to-date weighting system.

This can be overcome by assuming that each of the vertices V1 to V10 exists at one end of their respective roads so that each weighted arc consists only of a first portion corresponding to the travel time of that road, and a second arc portion which corresponds to the travel time to traverse a junction. In this way if a particular road becomes blocked in one direction, only a single weighted arc needs to be changed. Thus, travel time changes due to different road conditions can be more easily implemented and also travel time differences due to different turning movements at the junctions J1 to J4 can be taken account of in the corresponding weighted arc.

Once a directed graph of the form of Figure 2 has been generated a computer software routine may be implemented, in known manner, in order to determine a minimum route through the road network of Figure 1. Minimum route search algorithms are known, for example, from a paper by E.W. Dykstra entitled "A note on two problems in connection with graphs", published in Numerische Mathematik 1, (1959), pages 269-271; a paper by M. Pollak and W. Wiebenson entitled "Solutions of the shortest route problem", published in Operations Research 8, 1960, pages 224-230; and from a paper by Randolf W. Hall entitled "The fastest path through a network with random time-dependent travel times" published in Transportation Science, Vol. 20, No. 3, August, 1966.

## Claims

1. A method of coding a road network for navigation purposes comprising the step of generating a directed graph in respect of said road network, said directed graph comprising a node or vertex corresponding to each of the roads of said road network, and one or more weighted arcs corresponding to each of said road junctions interconnecting said nodes or vertices.

2. A method as claimed in claim 1, in which each node or vertex is defined as being at one end of the road to which it corresponds.

3. A method as claimed in claim 2, in which each weighted arc is defined to include an arc portion relating to the corresponding road junction and a further arc portion relating to a road terminating at said road junction.

4. A road network navigation system comprising means for generating a directed graph in respect of the road network in accordance with the method as claimed in claims 1 to 3, and means for implementing a minimum route search algorithm based on said directed graph for determining a navigation path through said road network.

## Patentansprüche

1. Verfahren zum Kodieren eines Strassennetzes für Navigationszwecke, umfassend den Schritt des Erzeugens einer gerichteten graphischen Darstellung in bezug auf besagtes Strassennetz, wobei die besagte gerichtete graphische Darstellung einen Knoten- oder Scheitelpunkt umfasst entsprechend jeder der Strassen von besagtem Strassenentz, und eine oder mehrere gewichtete Bogenlinien entsprechend jeder der Strassenkreuzungen, welche die besagten Knoten- oder Scheitelpunkte verbinden.

2. Verfahren nach Anspruch 1, in welchem jeder Knoten- oder Scheitelpunkt an einem Ende angeordnet von derjenigen Strasse definiert ist, welcher er zugeordnet ist.

3. Verfahren nach Anspruch 2, in welchem jede gewichtete Bogenlinien definiert ist, einen Bogenabschnitt zu umfassen, entsprechend der jeweiligen Strassenkreuzung, und einen weiteren Bogenabschnitt, entsprechend einer Strasse, welche an besagter Kreuzung endet.

4. Ein Strassennetz-Navigationssystem, umfassend Mittel für das Erzeugen einer gerichteten graphischen Darstellung in bezug auf das Strassennetz in Übereinstimmung mit dem Verfahren nach einem der Ansprüche 1 bis 3, und Mittel für das Durchführen eines Minimum-Streckensuchalgorithmus, basierend auf besagter gerichteten graphischen Darstellung für das Bestimmen eines Navigationspfades durch das besagte Strassennetz.

## Revendications

1. Procédé de codage d'un réseau routier pour des applications de navigation, comprenant une étape de création d'un graphe orienté par rapport au réseau routier, le graphe orienté comprenant un noeud ou sommet correspondant à chacune des routes du réseau routier, et un ou plusieurs arcs pondérés correspondant à chacune des jonctions de routes reliant les noeuds ou sommets.

2. Procédé selon la revendication 1, dans lequel chaque noeud ou sommet est déterminé comme se trouvant à une extrémité de la route à laquelle il correspond.

3. Procédé selon la revendication 2, dans lequel chaque arc pondéré est déterminé afin qu'il comprenne une partie d'arc correspond à la jonction correspondante de routes et une partie supplémentaire d'arc correspondant à une route se terminant à la jonction de routes.

4. Système de navigation dans un réseau routier, comprenant un dispositif générateur d'un graphe orienté relatif au réseau routier par mise en oeuvre du procédé selon les revendications 1 à 3, et un dispositif destiné à mettre en oeuvre un algorithme de recherche du chemin minimal en fonction du graphe orienté afin qu'il détermine un trajet de navigation par le réseau routier.
